# EUROPEAN PATENT SPECIFICATION

(11) **EP 3 800 583 B1**
(45) Date of publication and mention of the grant of the patent: **13.09.2023**
(21) Application number: 19201510.5
(22) Date of filing: 04.10.2019
(51) Int. Cl.: G06K 15/10, B41J 2/21, B41J 19/14

(54) **METHOD OF PRINTING INK**
VERFAHREN ZUM DRUCKEN VON TINTE
PROCÉDÉ D'IMPRESSION D'ENCRE

(43) Date of publication of application: 07.04.2021
(73) Proprietor: Canon Production Printing Holding B.V., 5914 HH Venlo (NL)
(72) Inventor: GERRITS, Carolus E.P., 5914 HH Venlo (NL)
(74) Representative: Canon Production Printing IP Department

(56) References cited:
- US-A1- 2002 054 180
- US-A1- 2015 283 804
- US-A1- 2017 313 057

## Description

### BACKGROUND OF THE INVENTION

### 1. Field of the invention

The invention relates to a method for applying ink at a print position of a recording medium, using at least two print heads, mounted on a scanning print carriage, each comprising a series of print elements, the print position being scanned over by each print head in a main scanning direction in such a way that there are at least two opportunities for one of the print elements of each print head to apply a droplet of ink at said print position, a first opportunity using a first print element occurring before a second opportunity using a second print element. These methods are also known as multipass print modes. The invention further relates to a printer that is configured to apply this method.

### 2. Description of the Related Art

Inkjet printing is available in many different ways. Although single pass printing using a page wide array is very common for some applications, the more traditional form of scanning ink jet printing is still the main way for printing on substrates with dimensions larger than the width of a print head or a print head assembly. As is well known, in scanning ink jet printing, a print head assembly crosses a medium back and forth and the print elements in the print heads apply ink droplets as controlled by the engine controller according to a digital image, while a substrate is moved underneath the assembly of print elements. This may be done either single pass or multipass, which means that at least two print elements of an array of print elements in a print head pass a line of print positions on the medium. In that way the required ink in this line of print positions may be provided by either a first print element passing those print positions or a second print element passing those print positions or both. Usually each print element supplies a part of the ink required in the line of print positions on the medium.

It is noted that for colour printing at least three different inks are necessary, but more often four different colour inks are applied, commonly having a cyan, magenta, yellow and black colour. Many configurations of print elements and print heads exist. Some configurations comprise a single print head having several arrays of print elements with different channels for different inks, other configurations comprise several print heads with one or more arrays for a single ink. For clarity, in this description a print head is used for a single colour ink and a configuration of print element arrays applying a single colour ink is called a print head. Furthermore, the term "print head", "print" and derivatives thereof are to be understood to include any device or technique that deposits or creates material on a surface in a controlled manner.

In most inkjet printing systems, precautions are taken for a situation that one of the print elements does not provide an ink drop as required. This may be due to an inability to generate an ink drop when the print element is controlled to do so or due to a disturbance that misdirects the ink drop. In these cases the print element may be designated as a failing nozzle and the required ink drops may be provided in another way, the failing nozzle being disregarded and the ink that is not applied, although the printed image requires that ink, being designated as missing ink. Several strategies have been developed to prevent or diminish the effects of the missing ink, which otherwise may result in print artifacts. These strategies range from providing the ink by other print elements passing the same print position on the medium in multipass print modes to transferring the missing ink to neighbouring nozzles in order to preserve the ink density on the medium, both in single pass and multipass modes. Combinations of these strategies have also been used.

However, the present inventors have noticed that in some print processes these known strategies are not sufficient and that artifacts in a print around a failing nozzle are still visible. It is therefore an object of their invention to provide a further method to mitigate the effects of a failing nozzle.

US 2002/054180 A1 discloses a method similar to the method according to claim 1. However, US 2002/054180 A1 does not disclose the following features of claim 1:
In step b), the first print element is not a failing print element, and other print elements of the first print head, including the first print element of the first print head, are controlled to provide missing ink that would be applied by the failing print element to respective print positions.
In step c), the second print element is not a failing print element, and a second print element of the first print head is controlled to apply in a second pass the missing ink that would have been applied by the failing print element to the respective print positions; and the ink of the second color is applied by the second print head only in step c.

### SUMMARY OF THE INVENTION

In order to achieve this object, the method according to the invention provides an additional strategy for applying ink in a multipass scanning inkjet print process, the method comprising the steps as indicated in claim 1.

The inventors have found that the missing ink in a print line after a first pass has an effect on the position of the ink that has been applied by the print elements adjacent to the failing print element. This ink may move away from the line on the medium where no ink is applied. Although the missing ink is provided later in a second pass by another print element, the movement of the first ink drops cannot be made undone anymore. A small amount of another ink, a replacement ink, that has no function in providing optical density may be applied on the print line of the missing ink, thus keeping the position of ink drops on the neighbouring print lines unchanged. It is only necessary to apply this replacement ink if a failing print element is the first element passing a print line. In a second pass, a second print element provides the ink of the same colour as the missing ink to provide the necessary optical density, as is usual in a multipass print mode. It is noted that unlike the known methods, the replacement ink is not provided if the failing print element is not the first print element passing the print line.

According to the invention, the replacement ink has a light to invisible colour, such as yellow ink or colourless ink. This feature leads to a minimum impact of the replacement ink on the colour of the print line. In a further embodiment, the amount of replacement ink is proportional to, but lower than the amount of missing ink.

Further details of the invention are given in the dependent claims. The present invention may be embodied in a software product comprising program code on a non-transitory machine-readable medium, wherein the program code, when loaded into a controller of a printer, makes the printer execute the invented method.

Further scope of applicability of the present invention will become apparent from the detailed description given hereinafter. However, it should be understood that the detailed description and specific examples, while indicating preferred embodiments of the invention, are given by way of illustration only, since various changes and modifications within the scope of the invention will become apparent from this detailed description.

### BRIEF DESCRIPTION OF THE DRAWINGS

The present invention will become more fully understood from the detailed description given herein below and the accompanying drawings which are given by way of illustration only, and thus are not limitative of the present invention, and wherein:
Fig. 1A is a schematic perspective view of a printing system according to the present invention;
Fig. 1B is a schematic perspective view of an inkjet printing assembly the printing system in Fig. 1A;
Fig. 2, comprising Fig. 2A, 2B, 2C, represents the dot positions on the medium around a print line addressed by a failing nozzle, and
Fig. 3 is a flowchart of a method according to the invention.

### DETAILED DESCRIPTION OF EMBODIMENTS

The present invention will now be described with reference to the accompanying drawings, wherein the same or similar elements are identified with the same reference numeral.

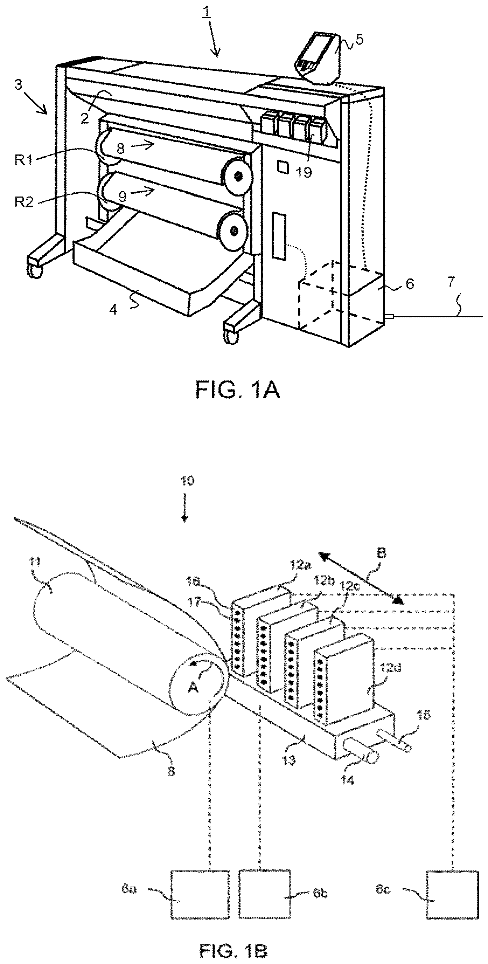

Fig. 1A shows an image forming apparatus 1, wherein printing is achieved using a wide-format inkjet printer. The wide-format image forming apparatus 1 comprises a housing 2 holding a print head assembly (not shown). The image forming apparatus 1 also comprises at least one media input unit 3 for storing one or more media 8, 9 in the form of a wound-up roll of web medium. The media 8, 9 are supplied by a roll. The roll 8 is supported on the roll support R1, while the roll 9 is supported on the roll support R2. A transport path extends from the media input unit 3 along the print head assembly 10 to a receiving unit 4 to collect the medium 8, 9 after printing. A storage unit 19 for marking material is provided to hold marking materials in the form of ink. Each marking material for use in the print head assembly 10 is stored in one of a plurality of containers 19 arranged in fluid connection with the respective print heads for supplying marking material to said print heads to print an image on the medium 8, 9. The receiving unit 4 may comprise a take-up roller for winding up the printed medium 8, 9 or a receiving tray for supporting sheets of printed medium 8, 9. Optionally, the receiving unit 4 may comprise processing means for processing the medium 8, 9 after printing, e.g. a posttreatment device such as a coater, a folder or a puncher. The wide-format image forming apparatus 1 furthermore comprises a local user interface 5 for receiving print jobs and optionally for manipulating print jobs. The local user interface unit 5 is integrated into the print engine and may comprise a display unit and a control panel. Alternatively, the control panel may be integrated in the display unit, for example in the form of a touch-screen control panel. The local user interface unit 5 is connected to a control unit 6 connected to the image forming apparatus 1. The control unit 6, for example a computer, comprises a processor adapted to issue commands to the image forming apparatus 1, for example for controlling the print process. The image forming apparatus 1 may optionally be connected to a network N. The connection to the network N is diagrammatically shown in the form of a cable 7, but nevertheless, the connection could be wireless. The image forming apparatus 1 may receive printing jobs via the network N. Further, optionally, the control unit 6 of the image forming apparatus 1 may be provided with a USB port, so printing jobs may be sent to the image forming apparatus 1 via this USB port.

Fig. 1B shows an ink jet print head assembly 10. The ink jet print head assembly 10 faces a medium support surface to support the medium 8, 9 during printing. The medium support surface in Fig. 1B is provided on a platen 11 in the form of a rotatable drum, but may, alternatively, be a flat support surface. The medium support surface is preferably provided with suction holes for at least temporarily holding the medium 8, 9 in a fixed position with respect to the medium support surface. The ink jet print head assembly 10 comprises print heads 12a - 12d, mounted on a scanning print carriage 13. The scanning print carriage 13 moves in reciprocation in direction B, guided by suitable guides 14, 15. Each print head 12a - 12d comprises an orifice surface 16, which is provided with at least two, but preferably more than hundred, orifices 17, also called nozzles sometimes. The print heads 12a - 12d are configured to eject droplets of marking material onto the medium 8, 9. The medium support surface, the carriage 13 and the print heads 12a - 12d are controlled by suitable controlling means 6a, 6b and 6c, respectively.

The medium 8, 9 is supplied in web form and may be composed of e.g. paper, cardboard, label stock, coated paper, plastic or textile. The medium 8, 9 is moved in a sub-scanning direction A by the platen 11 along the four print heads 12a - 12d provided with a fluid marking material, each having a different colour, usually black, cyan, magenta and yellow. Often, in a full-color printer, black marking material is used more frequently in comparison to differently colored marking material. Therefore, more print heads 12a - 12d containing black marking material may be provided on the scanning print carriage 13 compared to print heads 12a - 12d containing marking material in any of the other colours. Alternatively, the print head 12a - 12d containing black marking material may be larger than any of the print heads 12a - 12d, containing a differently colored marking material.

Each print head 12a - 12d is in fluid communication with a pressure chamber containing fluid marking material provided in the print head 12a - 12d. On the orifice surface 16, a number of orifices 17 are arranged in a single linear array parallel to the sub-scanning direction A. Eight orifices 17 per print head 12a - 12d are depicted in Fig. 1B, however obviously in a practical embodiment at least several hundreds of orifices 17 may be provided per print head 12a - 12d, optionally arranged in multiple arrays. As depicted in Fig. 1B, the respective print heads 12a - 12d are placed parallel to each other such that corresponding orifices 17 of the respective print heads 12a - 12d are positioned in-line in the main scanning direction B. This means that a line of image dots in the main scanning direction B may be formed by selectively activating up to four orifices 17, each of them being part of a different print head 12a - 12d. In this embodiment a voltage is applied to a piezo-electric actuator corresponding to an orifice, but other forms of actuation are known. The parallel positioning of the print heads 12a - 12d with corresponding in-line placement of the orifices 17 is advantageous to increase productivity and/or improve print quality. Alternatively, multiple print heads 12a - 12d may be placed on the print carriage adjacent to each other such that the orifices 17 of the respective print heads 12a - 12d are positioned in a staggered configuration instead of in-line. For instance, this may be done to increase the print resolution or to enlarge the effective print area, which may be addressed in a single scan in the main scanning direction. The image dots are formed by ejecting droplets of marking material from the orifices 17.

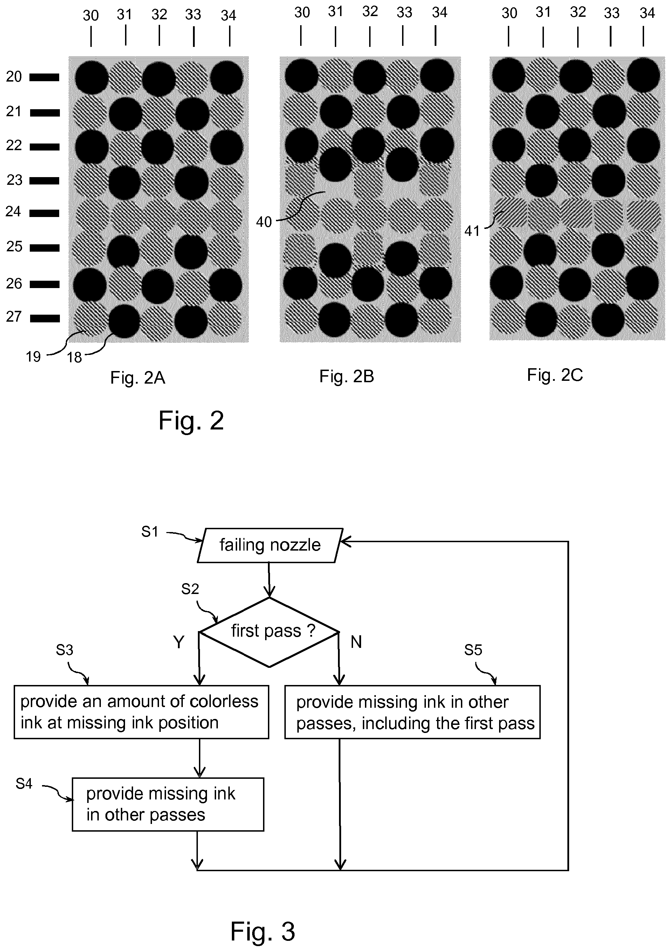

Fig. 2, comprising Fig. 2A, 2B, and 2C, shows the working of the invented method on the basis of a 2-pass print of a full coverage print area. Each figure comprises a number of dots of the same ink on the print lines 20 to 27. The print head moves in the direction of these print lines. To discriminate the dots printed in the different passes, the various dots have been shaded differently, although they are indistinguishable after application. The filled dots 18 are printed in a first pass, the shaded dots 19 are printed in a second pass. In each pass, a different nozzle is used for a print line. It is noted that the size of the dots in these figures do not necessarily correspond to the actual dot sizes.

Fig. 2A shows the expected outcome of this print method in the case that a nozzle corresponding to print line 24 in the first pass does not function properly. This means that the dots in columns 30, 32, and 34 in this print line cannot be applied in the first pass. The existing compensation method is configured to make sure that a nozzle in the second pass provides the missing ink, such that a full coverage is obtained despite the failing nozzle in the first pass. However, the inventors have found that still an artifact is visible around the print line of the failing nozzle. This is illustrated in Fig. 2B. It was found that the dots printed in the first pass in lines 23 and 25, adjacent to the print line 24 of the failing nozzle, move towards the neighbouring lines where ink dots are present, such that voids 40 result. In a second pass, sufficient ink is provided in line 24, but the voids remain. Fig. 2C shows how this problem is solved by the present invention. The dots 41, which are shaded in a different direction than the dots 19, indicate dots that have been printed with a first ink, different from the ink of dots 18 and 19, in the first pass and printed again in the second pass with the same ink as dots 18 and 19. This first ink is a colorless ink, or, if that ink is not available, a light ink such as yellow ink. This will only slightly affect the color of the ink that is printed in the second pass, whereas, the colorless or yellow ink printed in the first pass will hold the dots in adjacent lines, in this case in lines 23 and 25. Of course, this effect is dependent on the behavior of the ink in a specific print process. In this case, a UV-curable, gelling ink was used in a print process, wherein a UV-curing station passes the printed lines after all print passes are finished. However, this effect may also occur in other ink jet processes, in particular those processes, wherein the applied ink dwells on a substrate surface, instead of penetrating the surface of the substrate.

Fig. 3 shows a flow diagram for a method according to the invention. This method is executed before a swath of a multipass print mode is printed during a scanning movement of the print head assembly. In step S1 a list of failing nozzles is determined. This may be done based on a response signal from the piezo-electric actuators of the print elements or, alternatively, from optical reading a test chart for checking the functioning of every print element. For every failing print element, also known as a failing nozzle, it is determined in step S2 if the print element passes a virginal area of the substrate (Y) or if the print line corresponding to the nozzle scanning the substrate already comprises ink from a previous pass (N). In the first case, branch Y, step S3 is performed, wherein an amount of colorless ink, or in the present printer yellow ink, since a colorless ink is not available, is applied instead of the missing ink in the print line. This amount may be equal to the amount of missing ink, i.e. every dot to be printed on the print line in the first pass is substituted by a dot of the colorless ink. In an alternative embodiment, the amount of colorless ink is proportional to the amount of missing ink, such as only 30% to 50% of the missing ink is substituted. The presence of this ink prevents the ink dots in neighbouring print lines from moving away from the print line corresponding to the failing nozzle. Additionally, the missing ink is provided in further passes by another nozzle passing the print line. This ink is placed on top of the colorless ink in addition to the ink that would be applied in this pass if no nozzle failure would have occurred. In the second case, branch N, step S5 is performed, wherein only the missing ink is provided in other passes, including the first pass. Since there is already ink applied at the print line at the time the failing nozzle passes this line, it is no longer necessary to provide colorless ink. The already applied ink prevents the movement of the ink at adjacent print lines. This procedure is repeated until the list of failing nozzles is exhausted and the printing of the swath can take off.

It may be recognised that other embodiments are possible. It should be understood, however, that there is no intention to limit the invention to the specific forms disclosed, but on the contrary, the invention is to cover all modifications falling within the scope of the invention as expressed in the following claims.

## Claims

1. A method for applying ink at a print position of a recording medium, using at least two print heads, mounted on a scanning print carriage, each comprising a series of print elements, a first print head ejecting ink of a first color and a second print head ejecting ink of a second color, the second color having a light to invisible color, the print position being scanned over by each print head in a main scanning direction in such a way that there are at least two opportunities for one of the print elements of each print head to apply a droplet of ink at said print position, a first opportunity in a first pass using a first print element occurring before a second opportunity in a second pass using a second print element and applying a relative displacement in a sub-scanning direction between the print heads and the recording medium between the at least two passes, the method comprising the steps of:
a) determining a list of failing print elements that are not capable of applying an ink droplet as required;
b) if a failing print element is not a first print element of the first print head passing a line of print positions extending in the main scanning direction, and the first print element is not a failing print element, controlling other print elements of the first print head, including the first print element of the first print head, to provide missing ink that would be applied by the failing print element to the respective print positions;
c) if a failing print element is the first print element passing a line of print positions extending in the main scanning direction, and the second print element is not a failing print element, controlling a print element of the second print head to apply an amount of ink at respective print positions where the failing print element would apply ink, in the same pass as the failing print element passes said positions and, in addition, controlling a second print element of the first print head to apply in a second pass the missing ink that would have been applied by the failing print element to the respective print positions,
wherein the ink of the second color is applied by the second print head only in step c.

2. The method according to claim 1, wherein the print element of the second print head only applies ink at the line of print positions extending in the main scanning direction where the first, failing print element passes over, if a neighbouring line of print positions extending in the main scanning direction comprises a predetermined amount of ink dots.

3. The method according to claim 1, wherein the amount of ink in step c) is proportional to the amount of missing ink at said print positions.

4. The method according to claim 1, wherein the print element of the second print head only applies ink at the print positions where the first, failing print element would have applied an ink drop.

5. A print system comprising at least two print heads for applying ink drops on a substrate and a control unit for controlling a relative movement of the print heads and substrate, the print system being suitable and the control unit being configured for carrying out a method according to claim 1.

6. A software product comprising program code on a non-transitory machine-readable medium, wherein the program code, when loaded into a controller of a printing system according to claim 5, causes the controller to perform a method according to claim 1.

## Patentansprüche

1. Ein Verfahren zum Aufbringen von Tinte an einer Druckposition eines Aufzeichnungsmediums unter Verwendung von mindestens zwei Druckköpfen, die auf einem Scan-Druckwagen montiert sind und jeweils eine Reihe von Druckelementen umfassen, wobei ein erster Druckkopf Tinte einer ersten Farbe ausstößt und ein zweiter Druckkopf Tinte einer zweiten Farbe ausstößt, wobei die zweite Farbe eine helle bis unsichtbare Farbe hat, wobei die Druckposition von jedem Druckkopf in einer Hauptabtastrichtung derart abgetastet wird, dass es mindestens zwei Gelegenheiten für eine der Druckelemente jedes Druckkopfs gibt, um einen Tintentropfen an der Druckposition aufzutragen, wobei eine erste Gelegenheit in einem ersten Durchgang unter Verwendung eines ersten Druckelements bevor einer zweiten Gelegenheit in einem zweiten Durchgang unter Verwendung eines zweiten Druckelements und eine relative Verschiebung in einer Unterabtastrichtung zwischen den Druckköpfen und dem Aufzeichnungsmedium zwischen den mindestens zwei Durchgängen erfolgt, wobei das Verfahren die folgenden Schritte umfasst:
a) Ermitteln einer Liste fehlerhafter Druckelemente, die nicht in der Lage sind, einen Tintentropfen wie erforderlich aufzutragen;
b) wenn es sich bei einem fehlerhaften Druckelement nicht um ein erstes Druckelement des ersten Druckkopfes handelt, das eine Reihe von Druckpositionen passiert, die sich in der Hauptabtastrichtung erstrecken, und das erste Druckelement kein fehlerhaftes Druckelement ist, Steuern anderer Druckelemente des ersten Druckkopf, einschließlich des ersten Druckelements des ersten Druckkopfs, um fehlende Tinte bereitzustellen, die vom fehlerhaften Druckelement auf die jeweiligen Druckpositionen aufgetragen würde;
c) wenn ein fehlerhaftes Druckelement das erste Druckelement ist, das eine Reihe von Druckpositionen passiert, die sich in der Hauptabtastrichtung erstrecken, und das zweite Druckelement kein fehlerhaftes Druckelement ist, Steuern eines Druckelements des zweiten Druckkopfs, um einen Betrag aufzubringen von Tinte an jeweiligen Druckpositionen, an denen das fehlerhafte Druckelement Tinte auftragen würde, im selben Durchgang, in dem das fehlerhafte Druckelement diese Positionen passiert, und außerdem Steuern eines zweiten Druckelements des ersten Druckkopfs, um in einem zweiten Durchgang die fehlende Tinte aufzutragen Tinte, die vom ausgefallenen Druckelement auf die jeweiligen Druckpositionen aufgetragen worden wäre, wobei die Tinte der zweiten Farbe vom zweiten Druckkopf erst in Schritt c aufgetragen wird.

2. Verfahren nach Anspruch 1, wobei das Druckelement des zweiten Druckkopfs Tinte nur an der Zeile von Druckpositionen aufträgt, die sich in der Hauptabtastrichtung erstreckt und über die das erste, ausgefallene Druckelement hinweggeht, wenn eine benachbarte Zeile von Druckpositionen die sich in der Hauptabtastrichtung erstreckt, vorhanden ist, die eine vorgegebene Menge an Tintenpunkten umfasst.

3. Verfahren nach Anspruch 1, wobei die Tintenmenge in Schritt c) proportional zur Menge fehlender Tinte an den Druckpositionen ist.

4. Verfahren nach Anspruch 1, wobei das Druckelement des zweiten Druckkopfs Tinte nur an den Druckpositionen aufträgt, an denen das erste, ausgefallene Druckelement einen Tintentropfen aufgetragen hätte.

5. Ein Drucksystem umfassend mindestens zwei Druckköpfe zum Aufbringen von Tintentropfen auf ein Substrat und eine Steuereinheit zur Steuerung einer Relativbewegung der Druckköpfe und des Substrats, wobei das Drucksystem geeignet und die Steuereinheit zur Durchführung eines Verfahrens konfiguriert ist nach Anspruch 1.

6. Softwareprodukt, das Programmcode auf einem nichtflüchtigen maschinenlesbaren Medium umfasst, wobei der Programmcode, wenn er in einen Controller eines Drucksystems nach Anspruch 5 geladen wird, den Controller dazu veranlasst, ein Verfahren nach Anspruch 1 auszuführen.

## Revendications

1. Procédé d'application de l'encre à une position d'impression d'un support d'enregistrement, utilisant au moins deux têtes d'impression, montées sur un chariot d'impression à balayage, comprenant chacune une série des éléments d'impression, une première tête d'impression éjectant de l'encre d'une première couleur et une deuxième tête d'impression éjectant de l'encre d'une deuxième couleur, la deuxième couleur ayant une couleur claire à invisible, la position d'impression étant balayée par chaque tête d'impression dans une direction de balayage principale de telle sorte qu'il existe au moins deux opportunités pour l'une des éléments d'impression de chaque tête d'impression pour appliquer une gouttelette d'encre à ladite position d'impression, une première opportunité dans un premier passage utilisant un premier élément d'impression se produisant avant une seconde opportunité dans un second passage utilisant un deuxième élément d'impression et appliquant un déplacement relatif dans un direction de sous-balayage entre les têtes d'impression et le support d'enregistrement entre les au moins deux passages, le procédé comprenant les étapes consistant à :
a) déterminer une liste des éléments d'impression défaillants qui ne sont pas capables d'appliquer une gouttelette d'encre comme requis ;
b) si un élément d'impression défaillant n'est pas un premier élément d'impression de la première tête d'impression passant une ligne de positions d'impression s'étendant dans la direction de balayage principal, et le premier élément d'impression n'est pas un élément d'impression défaillant, commander d'autres éléments d'impression de la première impression tête, y compris le premier élément d'impression de la première tête d'impression, pour fournir l'encre manquante qui serait appliquée par l'élément d'impression défaillant aux positions d'impression respectives ;
c) si un élément d'impression défaillant est le premier élément d'impression passant une ligne de positions d'impression s'étendant dans la direction de balayage principal, et si le deuxième élément d'impression n'est pas un élément d'impression défaillant, commander un élément d'impression de la seconde tête d'impression pour appliquer une quantité d'encre aux positions d'impression respectives où l'élément d'impression défaillant appliquerait de l'encre, dans le même passage où l'élément d'impression défaillant passe lesdites positions et, en outre, commande un deuxième élément d'impression de la première tête d'impression pour appliquer dans un deuxième passage l'encre manquant qui aurait été appliquée par l'élément d'impression défaillant aux positions d'impression respectives, dans lequel l' encre de la seconde couleur est appliquée par la seconde tête d'impression uniquement à l'étape c.

2. Procédé selon la revendication 1, dans lequel l'élément d'impression de la seconde tête d'impression seulement applique de l'encre au niveau de la ligne de positions d'impression s'étendant dans la direction de balayage principal où passe le premier élément d'impression défaillant, si une ligne voisine de positions d'impression s'étendant dans la direction de balayage principal comprend une quantité prédéterminée de points d'encre.

3. Procédé selon la revendication 1, dans lequel la quantité d'encre à l'étape c) est proportionnelle à la quantité d'encre manquante auxdites positions d'impression.

4. Procédé selon la revendication 1, dans lequel l'élément d'impression de la deuxième tête d'impression n'applique de l'encre qu'aux positions d'impression où le premier élément d'impression défaillant aurait appliqué une goutte d'encre.

5. Système d'impression comprenant au moins deux têtes d'impression pour appliquer des gouttes d'encre sur un substrat et une unité de commande pour commander un mouvement relatif des têtes d'impression et du substrat, le système d'impression étant adapté et l'unité de commande étant configurée pour mettre en oeuvre un procédé selon la revendication 1.

6. Produit logiciel comprenant un code de programme sur un support lisible par machine non transitoire, dans lequel le code de programme, lorsqu'il est chargé dans un contrôleur d'un système d'impression selon la revendication 5, amène le contrôleur à exécuter un procédé selon la revendication 1.
